# EUROPÄISCHE PATENTSCHRIFT

(11) **EP 3 850 354 B1**
(45) Veröffentlichungstag und Bekanntmachung des Hinweises auf die Patenterteilung: **19.10.2022**
(21) Anmeldenummer: 19772971.8
(22) Anmeldetag: 10.09.2019
(51) Int. Cl.: B29C 70/30, G01N 29/30, G01N 29/04, G01N 25/72

(54) **VERFAHREN ZUR HERSTELLUNG EINES FASER-KUNSTSTOFF-VERBUND-VERGLEICHSKÖRPERS UND PRÜFUNGSVERFAHREN**
METHOD FOR PRODUCING A FIBER-REINFORCED PLASTIC COMPARISON BODY AND TESTING METHOD
PROCÉDÉ POUR PRODUIRE UN CORPS DE RÉFÉRENCE EN COMPOSITE FIBRES-MATIÈRE PLASTIQUE ET PROCÉDÉ DE CONTRÔLE

(30) Priorität: 10.09.2018 AT 507652018
(43) Veröffentlichungstag der Anmeldung: 21.07.2021
(73) Patentinhaber: FACC AG, 4910 Ried im Innkreis (AT)
(72) Erfinder: HÖLLER, Helmuth, 4910 Ried im Innkreis (AT); SPINDLER, Anna Carina, 4910 Ried im Innkreis (AT); KROISSMAYR, Stefan, 4910 Ried im Innkreis (AT)
(74) Vertreter: SONN Patentanwälte OG
(86) Internationale Anmeldenummer: PCT/AT2019/060292
(87) Internationale Veröffentlichungsnummer: WO 2020/051609

(56) Entgegenhaltungen:
- EP-A2- 1 750 123

## Beschreibung

Die Erfindung betrifft ein Verfahren zur Herstellung eines Faser-Kunststoff-Verbund-(FKV)-Vergleichskörpers zur Nachbildung einer Lagenporosität für die zerstörungsfreie Prüfung von FKV-Bauteilen, insbesondere Flugzeugbauteilen.

Weiters betrifft die Erfindung ein Verfahren zur zerstörungsfreien Prüfung eines FKV-Bauteils, insbesondere Flugzeug-Bauteils.

Bei der Herstellung von sicherheitskritischen Faser-KunststoffVerbund-(FKV)-Bauteilen, wie beispielsweise Flugzeugbauteilen, ist die anschließende Überprüfung und Erfassung von Bauteilfehlern von besonderer Bedeutung. Zu diesem Zweck werden üblicherweise zerstörungsfreie Prüfverfahren (engl. "non-destructive testing", kurz NDT) eingesetzt, um einerseits fehlerhafte Bauteile sofort erkennen zu können und andererseits fehlerfreie Bauteile nicht durch das Prüfverfahren selbst zu beschädigen. Um bei den Prüfverfahren auch Rückschlüsse auf potentielle Fehlerquellen in der Produktion ziehen zu können, werden detektierte Bauteilfehler einer Fehlerart bzw. einer Fehlerklasse zugeordnet. Zu Vergleichs- und Kalibrierungszwecken werden dazu Vergleichskörper mit gezielt eingebrachten künstlichen Bauteilfehlern hergestellt und mit Hilfe eines NDT-Verfahrens vermessen. Um dabei die exakte Zuordnung eines Bauteilfehlers zu einer Fehlerklasse zu gewährleisten, müssen die als Referenz dienenden künstlichen Bauteilfehler in den Vergleichskörpern die Produktionsfehler der Prüflinge so präzise wie möglich nachbilden.

Die meisten Bauteilfehler sind allerdings schwierig nachzubilden und bislang weichen künstliche Bauteilfehler, je nach Fehlerart, in Hinblick auf die Beschaffenheit mehr oder weniger stark von den Fehlern der Prüflinge ab. Insbesondere eine sogenannte Lagenporosität kann bislang nicht zufriedenstellend nachgebildet werden. Die Lagenporosität bezieht sich dabei auf eine konzentrierte Ansammlung von mikroskopischen und makroskopischen Gas- bzw. Lufteinschlüssen in der Matrix bzw. dem Verbindungsmittel des FKV-Materials zwischen zwei FKV-Lagen eines Bauteils. Somit ist die Lagenporosität von einer Delamination, d.h. einer flächigen Trennung von zwei FKV-Lagen, und einer Volumenporosität, d.h. einer Verteilung von mikro- und makroskopischen Gaseinschlüssen (Poren) in der Matrix des FKV-Laminats im Wesentlichen über den gesamten Querschnitt des FKV-Laminats, abzugrenzen. Da eine Lagenporosität zu einer teilweisen Trennung der FKV-Lagen führt und daher insbesondere bei Flugzeugbauteilen schwerwiegende Folgen haben kann, ist das Erkennen einer Lageporosität und damit das Erzeugen von Vergleichskörpern mit möglichst realistischer Simulation der Lageporosität von hoher Wichtigkeit.

Aus dem Stand der Technik sind unterschiedliche Verfahren zum Nachbilden von Bauteilfehlern bekannt. In der EP 3 193 164 A1 wird beispielsweise ein Verfahren beschrieben, bei dem mit Hilfe eines Expansionskörpers Bauteilfehler in FKV-Teile eingebracht werden können. Dazu wird der Expansionskörper zwischen mehreren Lagen von FKV-Material gelegt, Harz hinzugefügt und anschließend erhitzt. Aufgrund des hohen Ausdehnungskoeffizienten des Expansionskörpers schrumpft dieser während des Abkühlens stärker zusammen als das ihn umgebende FKV-Material und erzeugt dadurch einen großen bleibenden Hohlraum. Der Expansionskörper verbleibt anschließend als Fremdkörper im Bauteil.

Bei der CN 104407060 wird eine Porosität des Materials mit Hilfe von Glaskügelchen simuliert, die während des Produktionsprozesses in das Material eingebracht werden. Diese verbleiben allerdings ebenfalls im Material.

Daneben ist aus der US 2014/0346405 A1 ein Verfahren zur Erzeugung von Porosität in Verbundwerkstoffen bekannt. Dazu werden die Verbundwerkstoffmaterialien unterschiedlichen Aushärteverfahren ausgesetzt, um so unterschiedliche Porositätsgrade durch entweichende Gase zu erzeugen.

Des Weiteren ist aus der EP 1 750 123 A2 ein Verfahren zum Nachbilden von Bauteilfehlern in Verbundwerkstoffen bekannt. Hierbei werden Löcher in Lagen geschnitten, die einzelnen Lagen teilweise ausgehärtet und erst danach miteinander verbunden.

Aus der US 2007/0095141 A1 ist zudem eine Messmethode für Verbundwerkstoffe bekannt, in welche Bauteilfehler mit Hilfe eines Lasers eingebracht wurden.

Nachteilig ist, dass bei den aus dem Stand der Technik bekannten Vergleichskörpern häufig Fehldetektionen auftreten, da bei den bekannten Prüfverfahren aufgrund der im Vergleichskörper verbleibenden Fremdkörper das Messergebnis verfälscht wird und auch nicht festgestellt werden kann, ob der simulierte Bauteilfehler oder der Fremdkörper detektiert wird. Zum anderen ist bei jenen Methoden, die ein Erzeugen von Bauteilfehlern ohne verbleibende Fremdkörper im Vergleichskörper erlauben, das gezielte Einbringen von Bauteilfehlern an vorgesehenen Stellen in den Vergleichskörpern nicht möglich, was deren Detektion erheblich erschwert. All diese bekannten Methoden haben jedoch darüber hinaus gemeinsam, dass sie eine Lageporosität, also eine teilweise Trennung einzelner FKV-Lagen eines FKV-Bauteils, gar nicht oder nur unzufriedenstellend nachbilden können.

Der Erfindung liegt somit die Aufgabe zugrunde, zumindest einzelne Nachteile des Standes der Technik zu lindern bzw. zu beseitigen. Die Erfindung setzt sich daher insbesondere zum Ziel, ein Verfahren zu schaffen, bei dem die realitätsnahe Nachbildung einer Lagenporosität an definierten Stellen in einem FKV-Vergleichskörper ermöglicht wird.

Die gestellte Aufgabe wird dabei durch ein Verfahren mit zumindest folgenden Schritten gelöst:
i. Herstellen eines ersten Teils für den FKV-Vergleichskörper durch
   a. Anordnen einer ersten FKV-Lage mit einer Aussparung;
   b. Anordnen zumindest einer zweiten FKV-Lage auf der ersten FKV-Lage;
   c. Voraushärten der Anordnung aus erster und zweiter FKV-Lage, um den ersten Teil für den FKV-Vergleichskörper zu erhalten, wobei die Aussparung vor dem Voraushärten der Anordnung aus erster und zweiter FKV-Lage mit einem Platzhalter aufgefüllt wird, wobei der Platzhalter vor dem Aushärten einer Anordnung aus dem ersten Teil und einem zweiten Teil aus der Aussparung entfernt wird;
ii. Herstellen des zweiten Teils für den FKV-Vergleichskörper durch
   a. Anordnen von zumindest einer weiteren FKV-Lage;
   b. Voraushärten der Anordnung von zumindest einer weiteren FKV-Lage, um den zweiten Teil für den FKV-Vergleichskörper zu erhalten;
iii. Verbinden des ersten Teils mit dem zweiten Teil, wobei die Aussparung am ersten Teil dem zweiten Teil zugewandt wird; und
iv. Aushärten der Anordnung aus erstem Teil und zweitem Teil, wobei an der Aussparung in der ersten FKV-Lage eine Lagenporosität ausgebildet wird.

Bei dem erfindungsgemäßen Verfahren kann die Reihenfolge einzelner Schritte vertauscht werden. So kann der zweite Teil für den FKV-Vergleichskörper vor dem ersten Teil für den FKV-Vergleichskörper hergestellt werden.

Vorteilhafterweise ermöglicht das erfindungsgemäße Verfahren das gezielte Einbringen einer (künstlichen) Lagenporosität in einem FKV-Vergleichskörper, welcher aus FKV-Material besteht und daher Lagenporositäten bei den zu prüfenden FKV-Bauteilen, insbesondere für die Luftfahrtindustrie, auf realitätsnahe Weise nachbildet. Durch das erfindungsgemäße Verfahren kann die Lagenporosität ohne Einführung eines Fremdkörpers und auch ohne großvolumigen Gaseinschluss erzeugt werden. Zu Kalibrierungszwecken kann der FKV-Vergleichskörper anschließend einem NDT-Messverfahren, beispielsweise einem Thermografieverfahren, unterzogen werden. Aufgrund der realistischen Beschaffenheit der nachgebildeten Lageporosität eignen sich die vom Vergleichskörper gewonnenen Messergebnisse besonders gut als Vergleichs- bzw. Referenzwerte für die NDT-Prüfung von FKV-Bauteilen. Da bei der Erstellung des Vergleichskörpers auf die Einbringung von Fremdkörpern, d.h. nicht aus dem FKV-Material bestehende und am zu vergleichenden Bauteil üblicherweise nicht vorhandene Teile, verzichtet werden kann, können Messkurven des FKV-Vergleichskörpers aufgenommen werden, die mit großer Genauigkeit jenen von Bauteilen entsprechen, die eine "natürliche", d.h. bei der Serienproduktion entstandene, Lageporosität aufweisen. Eine "natürliche" Lageporosität ist dabei, wie eingangs erwähnt, eine konzentrierte Ansammlung von mikroskopischen und makroskopischen Gas- bzw. Lufteinschlüssen in der Matrix bzw. dem Verbindungsmittel des FKV-Materials zwischen zwei FKV-Lagen, was zu einer teilweisen Trennung der FKV-Lagen führt. Die einzelnen FKV-Lagen werden in dem FKV-Vergleichskörper - wie bei den zu prüfenden FKV-Bauteilen - vorzugsweise durch lose oder zu Geweben verbundene und mit Harz oder einem anderen Verbindungsmittel getränkte Fasern gebildet. Das Verbindungsmittel dient zur Verbindung der Fasern innerhalb einer FKV-Lage und zur Verbindung der FKV-Lagen. Als FKV-Material für sämtliche FKV-Lagen können unter anderem CFK (Kohlenstofffaserverstärkter Kunststoff), GFK (Glasfaserverstärkter Kunststoff) oder Aramidfasern, insbesondere zu Prepreg verarbeitete GFK-, Aramid- bzw. CFK-Materialien, vorgesehen sein. Die einzelnen FKV-Lagen im ersten bzw. zweiten Teil können durch ein, vorzugsweise in den FKV-Lagen enthaltendes, Verbindungsmittel verbunden sein.

Die Lageporosität wird bei dem erfindungsgemäßen Verfahren durch das Verbinden des ersten Teils mit dem zweiten Teil jeweils im vorausgehärteten Zustand mit Hilfe eines Verbindungsmittels, das auch in FKV-Materialien vorhanden ist, wie beispielsweise Harz, ein anderes Matrixmaterial oder eine unausgehärtete FKV-Lage, und abschließendem Aushärten des entstehenden Lagenaufbaus nachgebildet. Dabei werden jene Abschnitte des zweiten Teils, die dem ersten Teil zugewandt sind und nicht der Aussparung gegenüberliegen, im Wesentlichen vollständig und vollflächig mit den korrespondierenden Abschnitten des ersten Teils verbunden, wohingegen jene Abschnitte des zweiten Teils, die der Aussparung gegenüberliegen, nur teilweise und daher nicht vollständig mit dem ersten Teil verbunden werden. Dadurch ist die Lageporosität auf den Bereich der Aussparung beschränkt. Vorzugsweise werden mehrere Aussparungen und damit mehrere Lagenporositäten in der zuvor geschilderten Weise erzeugt, um dadurch beispielsweise eine Variation im Grad der Anbindung bzw. der Trennung zu Vergleichszwecken zu erhalten. Die Lageporosität entsteht dabei durch die Druckarmut im Bereich der Aussparung beim Aneinanderfügen der Teile. Vorzugsweise werden der vorausgehärtete erste Teil und der vorausgehärtete zweite Teil horizontal angeordnet, wobei der erste Teil auf den zweiten Teil gelegt und ein Verbindungsmittel vorgesehen wird. Gemäß einer bevorzugten Ausführungsform entsteht durch Anpressen des ersten Teils an den zweiten Teil vor und/oder während des Aushärtens mit einem für das verwendete FKV-Material geeigneten Aushärteverfahren an jenen Stellen, an denen keine Aussparung vorhanden ist, eine formschlüssige Verbindung, während in der Aussparung das Verbindungsmittel nur teilweise an dem ersten bzw. dem zweiten Teil anhaftet. Wesentlich ist dabei, dass beide Teile vor dem Verbinden vorausgehärtet werden, d.h. dass die beiden Teile soweit ausgehärtet werden, dass diese für die weiteren Verfahrensschritte ihre Form im Wesentlichen von selbst beibehalten und somit formstabil sind. Zum Voraushärten können die ersten Aushärteschritte eines für das verwendete FKV-Material geeigneten Aushärteverfahrens verwendet werden, d.h. das Aushärteverfahren wird beendet, sobald die Teile soweit ausgehärtet sind, dass diese für die weiteren Verfahrensschritte ihre Form im Wesentlichen von selbst beibehalten. Durch das Voraushärten des ersten Teils wird die innerhalb der Aussparung gesammelte Luft beim Verbinden mit dem zweiten Teil eingeschlossen, wodurch ein Lufteinschluss entsteht. Dieser Lufteinschluss bleibt auch bei einem Vakuumieren der Anordnung aus dem ersten und dem zweiten Teil bei deren Verbindung bestehen, da die Luft nicht durch den vorausgehärteten ersten Teil und den zweiten Teil entweichen kann. Nachdem der erste Teil mit dem zweiten Teil verbunden wurde, wird die Anordnung aus erstem und zweitem Teil ausgehärtet. Das Aushärten bedeutet in diesem Zusammenhang, dass das erste und zweite Teil und das Verbindungsmittel vollständig durch ein für das verwendete FKV-Material geeignetes Aushärteverfahren ausgehärtet werden. Eine durch das erfindungsgemäße Verfahren erzeugte Lageporosität kann, wie ihr natürliches Gegenüber, lokal beschränkt sein oder an mehreren Stellen im FKV-Vergleichskörper erzeugt werden. Bei Lageporosität an mehreren Stellen innerhalb einer FKV-Lage sind dementsprechend mehrere Aussparungen im ersten Teil zu erzeugen. Bei Lageporositäten in unterschiedlichen FKV-Lagen sind dementsprechend mehrere erste bzw. zweite Teile zu bilden, wobei ein erster Teil einen zweiten Teil bilden kann, der wiederum einem anderen ersten Teil zugeordnet ist. Bevorzugt ist eine Lageporosität vollständig innerhalb eines FKV-Bauteils bzw. FKV-Vergleichskörpers angeordnet und somit von allen Seiten von FKV-Material umgeben. Um die gewünschte Fehlergröße der Lagenporosität durch das erfindungsgemäße Verfahren zu erhalten, ist vorzugsweise vorgesehen, dass die Aussparung eine größere Breite und/oder Länge aufweist als die vorgesehene Länge bzw. Breite der Lagenporosität im ausgehärteten (End-)Zustand des FKV-Vergleichskörpers. Die größere Breite und/oder Länge ist abhängig vom Verbindungsmittel und dessen Viskosität und liegt insbesondere im Bereich zwischen 0,1 mm und 10 mm.

Um die Verbindung des ersten Teils mit dem zweiten Teil zu erleichtern und eine besonders realistische Lageporosität zu erzeugen, ist es vorteilhaft, wenn zum Verbinden des ersten Teils mit dem zweiten Teil eine FKV-Zwischenlage im unausgehärteten Zustand zwischen dem ersten Teil und dem zweiten Teil angeordnet wird. Eine unausgehärtete FKV-Lage, wie eine imprägnierte FKV-Zwischenlage, ist noch nicht vorausgehärtet bzw. ausgehärtet und kann daher noch in ihrer Form verändert werden. Die unausgehärtete Zwischenlage enthält Verbindungsmittel und ermöglicht dadurch die Verbindung des ersten Teils mit dem zweiten Teil. Zum Verbinden wird vorzugsweise der vorausgehärtete zweite Teil in eine horizontale Lage gebracht, die unausgehärtete FKV-Lage zunächst mit dem vorausgehärteten zweiten Teil verbunden und anschließend der vorausgehärtete erste Teil derart mit der unausgehärteten FKV-Lage verbunden, dass die Aussparung der unausgehärteten FKV-Lage zugewandt ist. Die unausgehärtete FKV-Zwischenlage stellt das Verbindungsmittel bereit. Es ist auch möglich, zunächst den vorausgehärteten ersten Teil in eine horizontale Lage zu bringen, die unausgehärtete FKV-Lage mit dem vorausgehärteten ersten Teil zu verbinden und anschließend den vorausgehärteten zweiten Teil derart mit der unausgehärteten FKV-Lage zu verbinden, dass die Aussparung der unausgehärteten FKV-Lage zugewandt ist.

Besonders vorteilhafte Bedingungen ergeben sich, wenn die Aussparung am ersten Teil durch Ausschneiden der ersten FKV-Lage gebildet wird. Dadurch wird die Herstellung des ersten Teils erheblich vereinfacht und es können verschiedene Formen der Aussparung entsprechend der gewünschten Fehlerform bzw. Fehlerkontur einfach aus der ersten FKV-Lage des ersten Teils ausgeschnitten werden.

Um eine exakt definierte Ausnehmung zu erzeugen, welche durch die Aussparung und die darüberliegende zumindest eine zweite FKV-Lage begrenzt wird, ist es vorteilhaft, dass die Aussparung vor dem Voraushärten der Anordnung aus erster und zweiter FKV-Lage mit einem Platzhalter aufgefüllt wird, wobei der Platzhalter vor dem Aushärten der Anordnung aus erstem und zweitem Teil aus der Aussparung bzw. der Ausnehmung entfernt wird. Dadurch kann verhindert werden, dass die zumindest eine zweite FKV-Lage insbesondere im unausgehärteten Zustand in die Aussparung durch ihr Eigengewicht hineinragt und so die Form der Ausnehmung und die Nachbildung der Lageporosität nachteilig beeinflusst. Vorteilhafterweise weist der Platzhalter dazu im Wesentlichen die gleiche Form bzw. Kontur wie die Aussparung auf. Vorzugsweise weist der Platzhalter des Weiteren eine Höhe auf, die geringer als die Dicke der ersten FKV-Lage ist.

Die Aussparung weist bevorzugt eine Länge von 4 mm bis 25 mm, insbesondere von 6 mm bis 20 mm, beispielsweise im Wesentlichen 10 mm, eine Breite von 4 mm bis 25 mm, insbesondere von 6 mm bis 20 mm, beispielsweise im Wesentlichen 10 mm und eine Höhe von 0,01 mm bis 2 mm, insbesondere von 0,05 mm bis 1 mm auf. Vorzugsweise ist vorgesehen, dass der Platzhalter und die Aussparung eine größere Breite und/oder Länge aufweist als die vorgesehene Länge bzw. Breite der Lagenporosität im ausgehärteten Zustand des FKV-Vergleichskörpers. Die größere Breite und/oder Länge ist abhängig vom Verbindungsmittel und dessen Viskosität und liegt insbesondere im Bereich zwischen 0,1 mm und 10 mm.

Bei einer ersten bevorzugten Ausführungsform ist als Platzhalter ein Einsatzplättchen, insbesondere aus Metall, vorgesehen. Ein solches Einsatzplättchen ist leicht und mit geringen Herstellungskosten zu fertigen und kann bei Bedarf wiederverwendet werden.

Bei einer zweiten bevorzugten Ausführungsform ist als Platzhalter ein Vorsprung an einem Formenträger vorgesehen. Ein Formenträger ist dabei ein Träger, auf welchen unausgehärtete FKV-Lagen platziert werden können, wobei der Formenträger, beispielsweise durch eine Wölbung oder eine ebene Fläche, die spätere Form der vorausgehärteten bzw. ausgehärteten FKV-Lagen vorgibt. Durch den Vorsprung am Formenträger kann vorteilhafterweise eine Sollposition bzw. eine Orientierung der ersten FKV-Lage vorgegeben werden.

Um das Lösen des Platzhalters aus der vorausgehärteten FKV-Lagen zu erleichtern, ist es vorteilhaft, wenn der Platzhalter vor dem Einsetzen in die Aussparung mit einem Trennmittel oder einer Trennfolie versehen wird. Dadurch kann der Platzhalter ohne Beschädigung des ersten Teils entfernt werden. Natürlich können auch andere Teile, wie beispielsweise Formenträger, mit einem solchen Trennmittel versehen sein, um sämtliche FKV-Bauteile leicht lösen zu können.

Der oben beschriebene FKV-Vergleichskörper kann für die NDT-Prüfung von FKV-Bauteilen verwendet werden.

Das Verfahren zur zerstörungsfreien Prüfung eines FKV-Bauteils, insbesondere Flugzeug-Bauteils, umfasst zumindest die folgenden Schritte:
- Herstellung eines Faser-Kunststoff-Verbund-(FKV)-Vergleichskörpers in einem Verfahren nach einem der Ansprüche 1 bis 6 ;
- Prüfen des FKV-Bauteils mittels eines zerstörungsfreien Prüfverfahrens, beispielsweise eines Thermografieverfahrens; und
- Vergleichen von Prüfergebnissen aus dem zerstörungsfreien Prüfverfahren für das FKV-Bauteil mit Vergleichswerten von dem FKV-Vergleichskörper.

Die Erfindung wird nachstehend anhand von bevorzugten Ausführungsformen weiter erläutert.
Fig. 1 zeigt eine Ansicht einer ersten FKV-Lage eines ersten Teils mit einer Aussparung für einen FKV-Vergleichskörper zur Simulation einer Lagenporosität.
Fig. 2 zeigt eine Explosionsdarstellung eines ersten Teils mit einer ersten FKV-Lage und zwei zweiten FKV-Lagen.
Fig. 3 zeigt eine Explosionsdarstellung eines zweiten Teils.
Fig. 4 zeigt das Zusammenfügen des ersten und des zweiten Teils mit Hilfe einer FKV-Zwischenlage.
Fig. 5a-5c zeigen das Zusammenfügen des ersten und des zweiten Teils mit Hilfe einer FKV-Zwischenlage in Querschnittsdarstellung und das Erzeugen der Lageporosität.
Fig. 6 zeigt ein Flussdiagramm des erfindungsgemäßen Verfahrens zur Herstellung eines FKV-Vergleichskörpers in einer bevorzugten Ausführungsvariante.
Fig. 7 zeigt ein Flussdiagramm eines NDT-Prüfverfahren mit einem durch das erfindungsgemäße Verfahren gemäß den Ansprüchen 1 bis 7 hergestellten FKV-Vergleichskörpers.

In den Figuren sind einzelne Verfahrensschritte zur Herstellung eines FKV-Vergleichskörpers 30 dargestellt, welcher bei der NDT-Prüfung von FKV-Bauteilen, wie beispielsweise Flugzeugflügel oder Flugzeugklappen, eingesetzt werden kann.

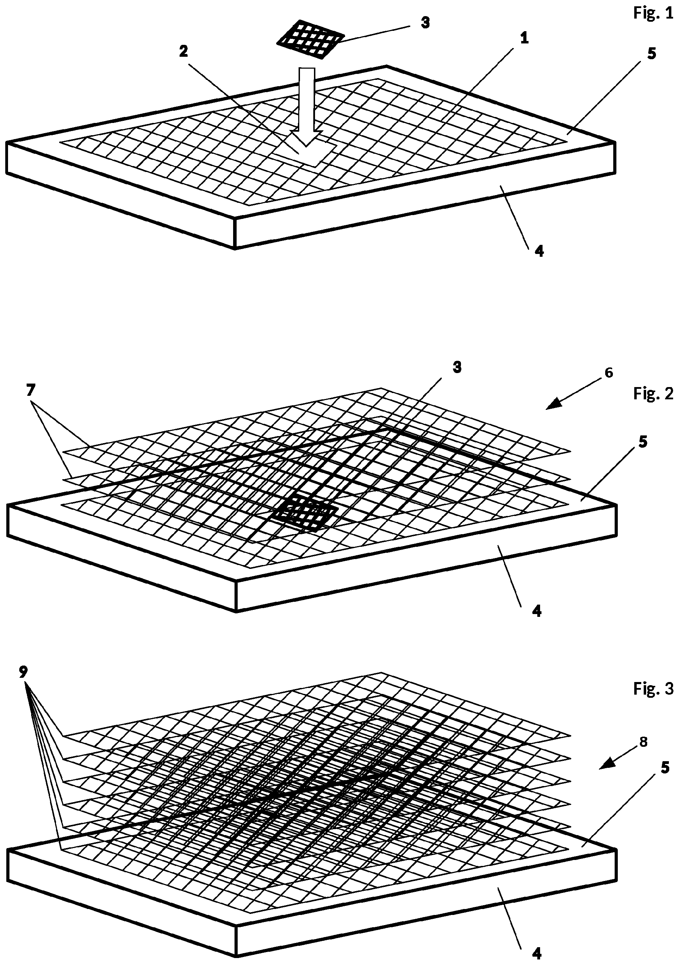

Fig. 1 zeigt eine erste (unausgehärtete) FKV-Lage 1, in welche mit Hilfe eines geeigneten Messers oder einem anderen Schneidewerkzeug eine Aussparung 2 geschnitten wurde. Vorzugsweise besteht die erste FKV-Lage 1, wie vor allem bei Flugzeugbauteilen üblich, aus CFK, GFK, Aramidfasern, insbesondere aus zu Prepreq verarbeiteten CFK-, Aramid- bzw. GFK-Materialien. Um zu verhindern, dass später darüberliegende FKV-Lagen, bedingt durch ihr Eigengewicht, in die Aussparung 2 hineinragen, wird ein Platzhalter 3 in Pfeilrichtung in die Aussparung 2 eingefügt. Der Platzhalter 3 weist zu diesem Zweck vorzugsweise im Wesentlichen die gleiche Form bzw. Kontur wie die Aussparung 2 und maximal die Höhe bzw. Dicke der ersten FKV-Lage 1 auf. Die dargestellte erste FKV-Lage 1 und die später darüberliegenden FKV-Lagen (nicht gezeigt) befinden sich in diesem anfänglichen Verfahrensschritt noch in einem unausgehärteten, d.h. formbaren Zustand, und werden auf einem Formenträger 4 angeordnet. Der Formenträger 4 gibt die spätere Form der (vor-)ausgehärteten FKV-Lagen vor, in diesem Falle eine ebene Fläche 5.

In Fig. 2 ist ein erster Teil 6 in Explosionsdarstellung gezeigt. Der erste Teil umfasst dabei die erste FKV-Lage 1 und zumindest eine zweite FKV-Lage 7. Die einzelnen FKV-Lagen des ersten Teils sind im zusammengesetzten Zustand untereinander mit einem, vorzugsweise in den FKV-Lagen enthaltenen, Verbindungsmittel miteinander verbunden. Die zumindest eine zweite FKV-Lage 7 wird bei dem erfindungsgemäßen Verfahren im unausgehärteten Zustand auf die ebenfalls im unausgehärteten Zustand befindliche erste FKV-Lage 1 gelegt und der dadurch gebildete erste Teil 6 anschließend durch entsprechende, dem Fachmann bekannte Verfahren vorausgehärtet, während der Platzhalter 3 in der Aussparung 2 verbleibt. Ein solches Voraushärteverfahren kann beispielsweise durch ein Aushärteverfahren in einem Autoklav mit Verwendung eines Vakuumsacks (nicht gezeigt) durchgeführt werden. Durch den in die Aussparung 2 eingefügten Platzhalter 3 wird nach dem Anordnen der zumindest einen zweiten FKV-Lage 7 auf die zumindest eine erste FKV-Lage 1 verhindert, dass die unausgehärtete zweite FKV-Lage 7 in die Aussparung 2 hineinragt bzw. sich durch ihr Eigengewicht in die Aussparung 2 wölbt. Der Platzhalter 3 weist zu diesem Zweck im Wesentlichen die gleiche Form bzw. Kontur wie die Aussparung 2 und maximal die Höhe bzw. Dicke der ersten FKV-Lage 1 auf. Nach dem Voraushärten wird der Platzhalter 3 wieder entfernt und hinterlässt auf diese Weise eine durch die Aussparung 2 und die darüberliegende zumindest eine zweite FKV-Lage 7 begrenzte Ausnehmung 15. Um das Entfernen des Platzhalters 3 zu erleichtern, kann dieser mit einem Trennmittel (nicht gezeigt) versehen sein. Auch der Formenträger 4 selbst kann mit einem solchen Trennmittel versehen sein.

In Fig. 3 ist eine Explosionsdarstellung eines zweiten Teils 8 gezeigt. Dieser umfasst in dem gezeigten Ausführungsbeispiel mehrere weitere FKV-Lagen 9, welche ebenfalls zunächst aneinandergefügt und anschließend durch entsprechende, dem Fachmann bekannte Verfahren vorausgehärtet werden. Die einzelnen FKV-Lagen des zweiten Teils sind im zusammengesetzten Zustand untereinander mit einem, vorzugsweise in den FKV-Lagen enthaltenen, Verbindungsmittel miteinander verbunden. Die weiteren FKV-Lagen 9 sind in der gezeigten Darstellung ebenfalls auf einem Formenträger 4 angeordnet und erhalten dadurch ihre spätere Form, in diesem Fall eine ebene Fläche 5.

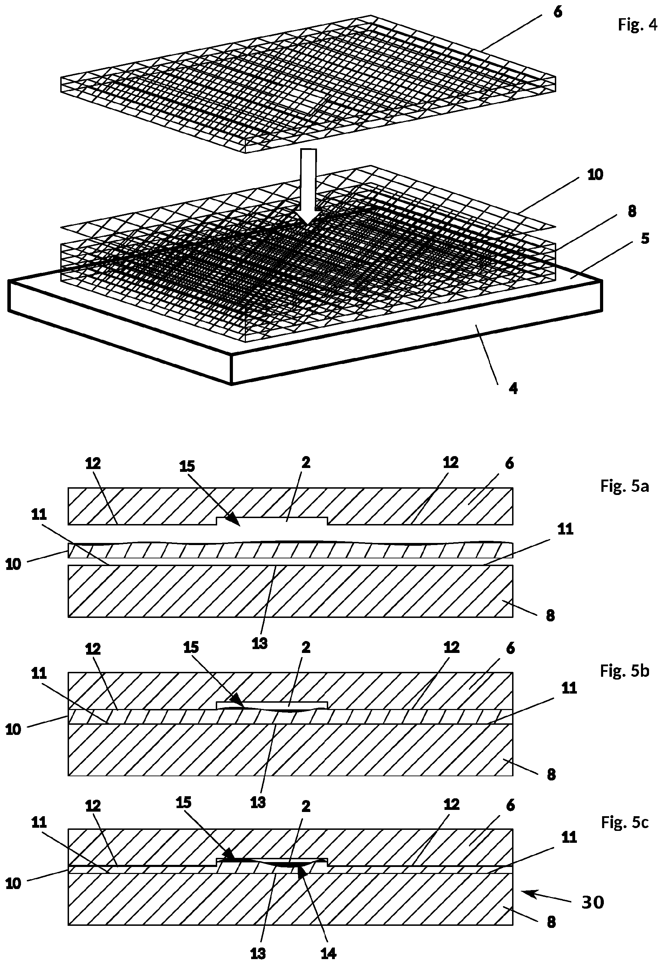

In Fig. 4 ist das Verbinden des vorausgehärteten ersten Teils 6 mit dem vorausgehärteten zweiten Teil 8 dargestellt. Dabei befindet sich der zweite Teil 8 in horizontaler Lage auf dem Formenträger 4. Der erste Teil 6 wird zum Verbinden so angeordnet, dass die Aussparung 2 des ersten Teils 6 dem zweiten Teil 8 zugewandt ist, wodurch vom ersten Teil 6 und vom zweiten Teil 8 ein Volumen eingeschlossen wird. Wie in Fig. 4 zu erkennen, ist zum Verbinden des ersten Teils 6 mit dem zweiten Teil 8 eine FKV-Zwischenlage 10 im unausgehärteten Zustand zwischen dem ersten Teil 6 und dem zweiten Teil 8 angeordnet.

Beim Verbinden des ersten Teils 6 mit dem zweiten Teil 8 (Fig. 5a-5c) werden jene Abschnitte 11 des zweiten Teils 8, die dem ersten Teil 6 zugewandt sind und nicht der Aussparung 2 gegenüberliegen, im Wesentlichen vollständig und vollflächig über die FKV-Zwischenlage 10 mit den korrespondierenden Abschnitte 12 des ersten Teils 6 verbunden, während jene Abschnitte 13 des zweiten Teils 8, die der Aussparung 2 gegenüberliegen, nur teilweise und daher nicht vollständig über die FKV-Zwischenlage 10 mit dem ersten Teil 1 verbunden werden. Der zweite Teil 8 ist vorzugsweise durchgängig flach, d.h. frei von Aussparungen, Vertiefungen und Wölbungen, zumindest in jenem Bereich, der der Aussparung 2 gegenüberliegt. Nachdem der erste Teil 6 mit dem zweiten Teil 8 verbunden wurde, wird die Anordnung bestehend aus erstem Teil 6 und zweiten Teil 8 ausgehärtet, wobei an der Aussparung 2 bzw. in der Ausnehmung 15 eine (künstliche) Lagenporosität 14 gebildet wird. Die Aushärtung und die Voraushärtung erfolgen durch ein für das FKV-Material geeignetes Aushärteverfahren insbesondere in einem Autoklav bevorzugt bei einem Druck von 2,5 bis 8 und bei einer Temperatur von 120°C bis 180°C. Der genaue Druck und die genaue Temperatur hängt allerdings vom verwendeten Material ab.

Die Figuren 5a bis 5c zeigen die Bildung der Lageporosität 14 in Querschnittsdarstellung der FKV-Lagen. In 5a sind der vorausgehärtete zweite Teil 8, die FKV-Zwischenlage 10 im unausgehärteten Zustand und der vorausgehärtete erste Teil 6 übereinander, aber noch nicht in Kontakt zu erkennen. In Fig. 5b sind der vorausgehärtete zweite Teil 8, die FKV-Zwischenlage 10 im unausgehärteten Zustand und der vorausgehärtete erste Teil 6 bereits in Kontakt gebracht. Es ist zu erkennen, dass die FKV-Zwischenlage 10 die zumindest eine zweite FKV-Lage 7 nicht berührt. Lediglich jene Abschnitte 11 des zweiten Teils 8, die dem ersten Teil 6 zugewandt sind und nicht der Aussparung 2 gegenüberliegen, sind im Wesentlichen vollständig und flächig über die FKV-Zwischenlage 10 mit den korrespondierenden Abschnitten 12 des ersten Teils 6 verbunden. Jene Abschnitte 13 des zweiten Teils 8, die der Aussparung 2 gegenüberliegen, sind jedoch nicht über die FKV-Zwischenlage 10 mit dem ersten Teil 6 verbunden. In Fig. 5c ist zu erkennen, wie durch Anpressen des ersten Teils 6 an den zweiten Teil, beispielsweise durch den Druck im Autoklaven, die FKV-Zwischenlage 10 zusammengepresst wird, wodurch es auch in der Ausnehmung 15 zur teilweisen Anbindung bzw. Haftung der FKV-Zwischenlage 10 an dem ersten Teil 6 bzw. der zumindest einen zweiten FKV-Lage 7 kommt. Durch Aushärten der Anordnung bestehend aus dem ersten Teil 6 und dem zweiten Teil 8 bildet sich die Lagenporosität 14 aus und es entsteht ein FKV-Vergleichskörper 30.

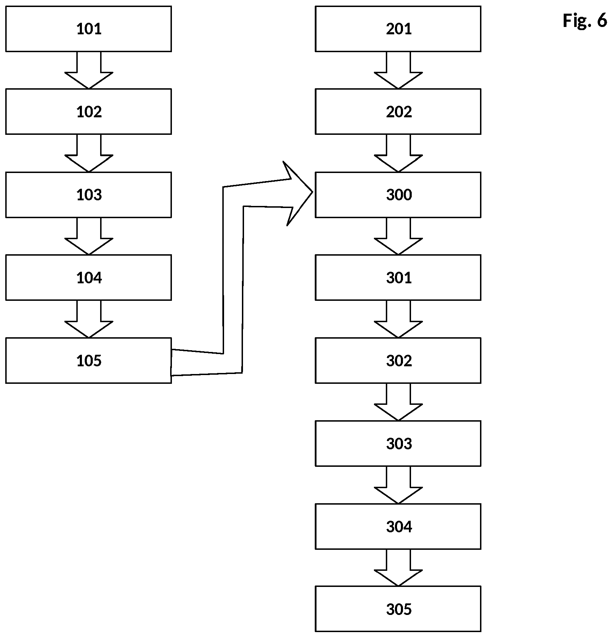

In Fig. 6 ist ein Flussdiagramm des erfindungsgemäßen Verfahrens zur Herstellung eines FKV-Vergleichskörpers 30 in einer bevorzugten Ausführungsform dargestellt, wobei als Verbindungsmittel eine FKV-Zwischenlage 10 im unausgehärteten Zustand verwendet wird. In einem ersten Schritt 101 wird die erste FKV-Lage 1 im unausgehärteten Zustand vorzugsweise auf einen Formenträger 4 aufgelegt. Anschließend wird die Aussparung 2 mit Hilfe eines Schneidewerkzeugs, beispielsweise eines Messers, in die erste FKV-Lage 1 geschnitten (Schritt 102). In Schritt 103 wird ein Platzhalter 3 in die Aussparung 2 eingelegt oder es wird alternativ die FKV-Lage 1 auf einem Vorsprung des Formträgers 4 so platziert, dass der Vorsprung in die Aussparung 2 ragt und diese zumindest teilweise ausfüllt. Anschließend wird zumindest eine zweite FKV-Lage 7 im unausgehärteten Zustand auf der ersten FKV-Lage 1 platziert (Schritt 104). Danach wird die Anordnung aus erster und zweiter FKV-Lage mit einem entsprechenden, dem Fachmann bekannten Verfahren vorausgehärtet, um den ersten Teil 6 für den FKV-Vergleichskörper 30 zu erhalten (Schritt 105).

Zur Erzeugung des zweiten Teils 8 werden parallel mehrere weitere FKV-Lagen 9 im unausgehärteten Zustand auf einem Formträger 4 angeordnet (Schritt 201) und mit einem entsprechenden, dem Fachmann bekannten Verfahren vorausgehärtet (Schritt 202).

In einem Schritt 300 werden der erste Teil 6 und der zweite Teil 8 für die nächsten Verfahrensschritte räumlich zusammengebracht. Dazu wird der zweite Teil auf dem Formträger 4 platziert (Schritt 301). Anschließend wird die FKV-Zwischenlage 10 (oder ein anderes Verbindungsmittel) auf den ersten Teil 6 gelegt (Schritt 302). Danach wird der Platzhalter 3 aus dem ersten Teil 1 entfernt (Schritt 303). Dieser Schritt kann auch vorher stattfinden, jedoch erst nach dem Voraushärten des ersten Teils 6. In Schritt 304 wird der erste Teil 6 zum Verbinden derart auf die FKV-Zwischenlage 10 gelegt, dass die Aussparung 2 des ersten Teils 6 dem zweiten Teil 8 zugewandt ist. In Schritt 305 wird die Anordnung aus erstem Teil 6 und zweitem Teil 8 samt Zwischenlage 10 in einem für das FKV-Material geeigneten Verfahren ausgehärtet und dabei vorzugsweise zusammengepresst. Dadurch bildet sich an der Aussparung 2 in der ersten FKV-Lage 1 die Lagenporosität 14 aus und es entsteht der FKV-Vergleichskörper 30.

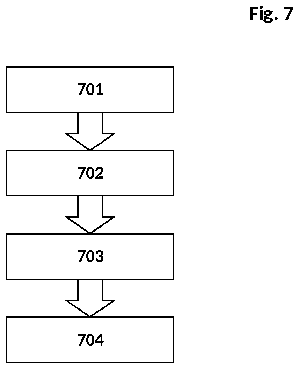

Fig. 7 zeigt einen bevorzugten Verfahrensablauf eines NDT-Prüfverfahrens mit einem FKV-Vergleichskörper 30. In einem Schritt 701 wird ein FKV-Vergleichskörper 30 durch den Verfahrensablauf gemäß Fig. 6 hergestellt. In einem Schritt 702 wird der Vergleichskörper 30 mit einem zerstörungsfreien Prüfverfahren, beispielsweise einem Thermografieverfahren oder einem Ultraschallverfahren, geprüft, um die künstlich erzeugte Lageporosität im FKV-Vergleichskörper 30 zu detektieren und zu vermessen. Dadurch können Vergleichswerte festgelegt werden. In einem Schritt 703 wird ein FKV-Bauteil aus FKV-Material, insbesondere ein Flugzeugbauteil, mit dem gleichen zerstörungsfreien Prüfverfahren geprüft, um Prüfergebnisse zu erhalten. In einem Schritt 704 werden die Prüfergebnisse aus Schritt 703 mit den Vergleichswerten aus Schritt 702 verglichen, um so eine Bewertung des FKV-Bauteils in Bezug auf allfällige Bauteilfehler, insbesondere eine Lageporosität, vornehmen zu können. Zu diesem Zweck werden vorzugsweise Signalamplituden oder andere, durch das zerstörungsfreie Prüferverfahren erzeugte, Signalarten miteinander verglichen. Bei Überschreiten eines festgelegten Grenzwertes, der aus den Vergleichswerten abgeleitet werden kann, kann ein fehlerhaftes FKV-Bauteil erkannt werden.

## Patentansprüche

1. Verfahren zur Herstellung eines Faser-Kunststoff-Verbund-(FKV)-Vergleichskörpers (30) zur Nachbildung einer Lagenporosität (14) für die zerstörungsfreie Prüfung von FKV-Bauteilen, insbesondere Flugzeug-Bauteilen, mit den Schritten:
i. Herstellen eines ersten Teils (6) für den FKV-Vergleichskörper (30) durch
a. Anordnen einer ersten FKV-Lage (1) mit einer Aussparung (2);
b. Anordnen zumindest einer zweiten FKV-Lage (7) auf der ersten FKV-Lage (1);
c. Voraushärten der Anordnung aus erster (1) und zweiter FKV-Lage (7), um den ersten Teil (6) für den FKV-Vergleichskörper (30) zu erhalten, wobei die Aussparung (2) vor dem Voraushärten der Anordnung aus erster (1) und zweiter FKV-Lage (7) mit einem Platzhalter (3) aufgefüllt wird, wobei der Platzhalter (3) vor dem Aushärten einer Anordnung aus dem ersten Teil (6) und einem zweiten Teil (8) aus der Aussparung (2) entfernt wird;
ii. Herstellen des zweiten Teils (8) für den FKV-Vergleichskörper (30) durch
a. Anordnen von zumindest einer weiteren FKV-Lage (9);
b. Voraushärten der Anordnung von zumindest einer weiteren FKV-Lage (9), um den zweiten Teil (8) für den FKV-Vergleichskörper (30) zu erhalten;
iii. Verbinden des ersten Teils (6) mit dem zweiten Teil (8), wobei die Aussparung (2) am ersten Teil (6) dem zweiten Teil (8) zugewandt wird; und
iv. Aushärten der Anordnung aus erstem Teil (6) und zweitem Teil (8), wobei an der Aussparung (2) in der ersten FKV-Lage (1) eine Lagenporosität (14) ausgebildet wird.

2. Verfahren nach Anspruch 1, **dadurch gekennzeichnet, dass** zum Verbinden des ersten Teils (6) mit dem zweiten Teil (8) eine FKV-Zwischenlage (10) im unausgehärteten Zustand zwischen dem ersten Teil (6) und dem zweiten Teil (8) angeordnet wird.

3. Verfahren nach einem der Ansprüche 1 bis 2, **dadurch gekennzeichnet, dass** die Aussparung (2) am ersten Teil (6) durch Ausschneiden der ersten FKV-Lage (1) gebildet wird.

4. Verfahren nach einem der Ansprüche 1 bis 3, **dadurch gekennzeichnet, dass** als Platzhalter (3) ein Einsatzplättchen, insbesondere aus Metall, vorgesehen ist.

5. Verfahren nach Anspruch 4, **dadurch gekennzeichnet, dass** als Platzhalter (3) ein Vorsprung an einem Formenträger (4) vorgesehen ist.

6. Verfahren nach einem der Ansprüche 1 bis 5, **dadurch gekennzeichnet, dass** der Platzhalter (3) vor dem Einsetzen in die Aussparung mit einem Trennmittel oder einer Trennfolie versehen wird.

7. Verfahren zur zerstörungsfreien Prüfung eines FKV-Bauteils, insbesondere Flugzeug-Bauteils, mit den Schritten:
- Herstellung eines Faser-Kunststoff-Verbund-(FKV)-Vergleichskörpers (30) in einem Verfahren nach einem der Ansprüche 1 bis 6;
- Prüfen des FKV-Bauteils mittels eines zerstörungsfreien Prüfverfahrens, beispielsweise eines Thermografieverfahrens; und
- Vergleichen von Prüfergebnissen aus dem zerstörungsfreien Prüfverfahren für das FKV-Bauteil mit Vergleichswerten von dem FKV-Vergleichskörper (30).

## Claims

1. Method for producing a fibre-reinforced plastics (FRP) comparison body (30) for modelling a layer porosity (14) for non-destructive testing of FRP components, in particular aircraft components, comprising the steps of:
i. producing a first part (6) for the FRP comparison body (30) by
a. arranging a first FRP layer (1) with a cut-out (2);
b. arranging at least one second FRP layer (7) on the first FRP layer (1); and
c. pre-hardening the arrangement of the first FRP layer (1) and second FRP layer (7) in order to obtain the first part (6) for the FRP comparison body (30), wherein the cut-out (2) is filled with a placeholder (3) before the arrangement of the first FRP layer (1) and second FRP layer (7) is pre-hardened, wherein the placeholder (3) is removed from the cut-out (2) before an arrangement of the first part (6) and a second part (8) is hardened;
ii. producing the second part (8) for the FRP comparison body (30) by
a. arranging at least one further FRP layer (9); and
b. pre-hardening the arrangement of at least one further FRP layer (9) in order to obtain the second part (8) for the FRP comparison body (30);
iii. connecting the first part (6) to the second part (8), wherein the cut-out (2) on the first part (6) faces the second part (8); and
iv. hardening the arrangement of the first part (6) and second part (8), wherein a layer porosity (14) is formed on the cut-out (2) in the first FRP layer (1).

2. Method according to claim 1, **characterised in that,** for connecting the first part (6) to the second part (8), an FRP intermediate layer (10) is arranged in the unhardened state between the first part (6) and the second part (8).

3. Method according to either claim 1 or claim 2, **characterised in that** the cut-out (2) is formed on the first part (6) by cutting out the first FRP layer (1).

4. Method according to any of claims 1 to 3, **characterised in that** an insert plate, in particular made of metal, is provided as a placeholder (3).

5. Method according to claim 4, **characterised in that** a projection on a mould carrier (4) is provided as a placeholder (3).

6. Method according to any of claims 1 to 5, **characterised in that** the placeholder (3) is provided with a separating means or a separating foil before said placeholder is inserted into the cut-out.

7. Method for non-destructive testing of an FRP component, in particular an aircraft component, comprising the steps of:
- producing a fibre-reinforced plastics (FRP) comparison body (30) in a method according to any of claims 1 to 6;
- testing the FRP component by means of a non-destructive testing method, for example a thermography method; and
- comparing test results from the non-destructive testing method for the FRP component with comparative values from the FRP comparison body (30).

## Revendications

1. Procédé de fabrication d'un corps de référence (30) en composite fibre-plastique (FRP) pour simuler une porosité de couche (14) pour le contrôle non destructif de pièces en FRP, en particulier de pièces d'avion, avec les étapes:
i. fabrication d'une première partie (6) pour le corps de référence en FRP (30) par
a. agencement d'une première couche de FRP (1) avec un évidement (2);
b. agencement d'au moins une deuxième couche de FRP (7) sur la première couche de FRP (1);
c. pré-durcissement de l'agencement de la première (1) et de la deuxième couche de FRP (7) pour obtenir la première partie (6) pour le corps de référence en FRP (30), où l'évidement (2) est rempli d'un élément d'écartement (3) avant le pré-durcissement de l'agencement de la première (1) et de la deuxième couche de FRP (7), où l'élément d'écartement (3) est retiré de l'évidement (2) avant le durcissement d'un agencement de la première partie (6) et d'une deuxième partie (8);
ii. fabrication de la deuxième partie (8) pour le corps de référence en FRP (30) par
a. agencement d'au moins une autre couche de FRP (9);
b. pré-durcissement de l'agencement d'au moins une autre couche de FRP (9) pour obtenir la deuxième partie (8) pour le corps de référence en FRP (30);
iii. liaison de la première partie (6) à la deuxième partie (8), où l'évidement (2) sur la première partie (6) fait face à la deuxième partie (8); et
iv. durcissement de l'agencement de la première partie (6) et de la deuxième partie (8), où une porosité de couche (14) est formée au niveau de l'évidement (2) dans la première couche de FRP (1).

2. Procédé selon la revendication 1, **caractérisé en ce que** pour lier la première partie (6) à la deuxième partie (8) une couche intermédiaire en FRP (10) est agencée à l'état non durci entre la première partie (6) et la deuxième partie (8).

3. Procédé selon l'une des revendications 1 à 2, **caractérisé en ce que** l'évidement (2) sur la première partie (6) est formé par découpe de la première couche de FRP (1).

4. Procédé selon l'une des revendications 1 à 3, **caractérisé en ce qu'**une plaquette d'insertion, en particulier en métal, est prévue comme élément d'écartement (3).

5. Procédé selon la revendication 4, **caractérisé en ce qu'**une saillie sur un support de forme (4) est prévue comme élément d'écartement (3).

6. Procédé selon l'une des revendications 1 à 5, **caractérisé en ce que** l'élément d'écartement (3) est muni d'un agent de séparation ou d'un film de séparation avant l'insertion dans l'évidement.

7. Procédé de contrôle non destructif d'une pièce en FRP, en particulier d'une pièce d'avion, avec les étapes:
- fabrication d'un corps de référence (30) en composite fibre-plastique (FRP) dans un procédé selon l'une des revendications 1 à 6;
- contrôle de la pièce en FRP à l'aide d'un procédé de contrôle non destructif, par exemple d'un procédé thermographique; et
- comparaison des résultats du contrôle issus du procédé de contrôle non destructif pour la pièce en FRP avec des valeurs comparatives du corps de référence en FRP (30).
